(19) Europäisches Patentamt
European Patent Office
Office européen des brevets

(11) EP 2 576 096 B1

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(21) Anmeldenummer: **12734882.9**

(22) Anmeldetag: **03.07.2012**

(51) Int Cl.:
*B21D 53/78* (2006.01)      *F03D 1/06* (2006.01)
*B21D 22/02* (2006.01)

(86) Internationale Anmeldenummer:
**PCT/EP2012/062927**

(87) Internationale Veröffentlichungsnummer:
**WO 2013/020757 (14.02.2013 Gazette 2013/07)**

(54) **UMFORMVERFAHREN ZUM WARMUMFORMEN EINES STAHLBLECHS EINES HERZUSTELLENDEN ROTORBLATTES EINER WINDENERGIEANLAGE**

FORMING PROCESS FOR HOT FORMING A STEEL SHEET OF A ROTOR BLADE TO BE PRODUCED FOR A WIND ENERGY PLANT

PROCÉDÉ DE DÉFORMATION POUR LE FORMAGE À CHAUD D'UNE TÔLE D'ACIER ENTRANT DANS LA FABRICATION D'UNE PALE DE ROTOR D'ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **05.08.2011 DE 102011080497**

(43) Veröffentlichungstag der Anmeldung:
**10.04.2013 Patentblatt 2013/15**

(73) Patentinhaber: **Wobben Properties GmbH**
**26605 Aurich (DE)**

(72) Erfinder:
• **VOIGT, Burkhard**
**39108 Magdeburg (DE)**
• **LABS, Oliver**
**39108 Magdeburg (DE)**
• **KERSTEN, Roy**
**39291 Hohenwarthe (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A2- 2 233 593      WO-A2-2010/100066**
**DD-A1- 159 055        DE-A1- 1 433 768**
**DE-A1- 2 402 190       DE-B- 1 180 709**
**US-A- 5 113 681**

**Beschreibung**

Die Erfindung betrifft eine Vorrichtung und ein Verfahren zum Warmumformen eines Stahlblechs eines Rotorblattes einer Windenergieanlage.

Windenergieanlagen sind heutzutage insbesondere als so genannte Horizontalachsen-Windenergieanlagen bekannt. Hierbei dreht ein aerodynamischer Rotor mit wenigstens einem, üblicherweise drei Rotorblättern um eine etwa horizontale Drehachse. Die Rotorblätter sind dabei aerodynamisch ausgestaltet und werden vom Wind bewegt, so dass besagte Drehbewegung erfolgt, die dann von einem elektrischen Generator in elektrische Energie umgesetzt werden kann.

Moderne Windenergieanlagen weisen zunehmend größere, insbesondere längere Rotorblätter auf. Es sind inzwischen schon Rotorblätter mit Längen von etwa 60 m, einer Tiefe von bis zu über 8 m und einer Dicke von bis zu über 3 m bekannt. Auch ein Anschlussflansch eines solchen Rotorblattes zur Befestigung einer Rotornabe weist schon heute einen Durchmesser von über 3,5 m auf. Für Rotorblätter solcher Größenordnungen kann es sinnvoll sein, diese zumindest abschnittsweise auch aus Stahl zu fertigen.

Stahlfertigung ist aus vielen anderen Technikbereichen bekannt, wie beispielsweise aus dem Schiffbau, eine Übertragung auf die Fertigung eines Rotorblattes einer Windenergieanlage ist aber aufgrund der sehr speziellen Anforderungen einer Rotorblattfertigung grundsätzlich nicht möglich. In diesem Zusammenhang ist insbesondere - aber nicht abschließend - zu nennen, dass bei einer Rotorblattfertigung trotz allem eine Leichtbauweise realisiert werden sollte, soweit dies bei Verwendung von Stahl überhaupt möglich ist. Weiterhin ist zu beachten, dass ein Rotorblatt einer Windenergieanlage permanent wechselnden Lasten ausgesetzt ist. Dabei ändert sich nicht nur eine Belastungsamplitude, sondern auch eine Belastungsrichtung und insbesondere kann es bei der Drehbewegung des Rotors aufgrund der Gravitation zu einem ständigen Wechsel zwischen Zug- und Druckbelastung kommen. Dabei ist ein Rotorblatt ein langer Hohlkörper, der auch einer ständigen und ständig wechselnden Biegebelastung standhalten muss. Zusätzlich zur Gewährleistung einer entsprechenden Stabilität muss das Rotorblatt aber eine aerodynamische Form aufweisen und entsprechend möglichst beibehalten. All diese Anforderungen sind so speziell, dass sie eine eigene, spezielle Berücksichtigung erforderlich machen. Insbesondere kann nur sehr eingeschränkt auf bisherige Erfahrungen im Stahlbau zurückgegriffen werden.

Für Windenergieanlagen ist aus den 1940-er Jahren die "Smith-Putnam Wind Turbine" bekannt, die ein Stahlrotorblatt eingesetzt hat. Informationen über diese "Smith-Putnam Wind Turbine" finden sich auf der englischen Wikipedia-Seite (http://en.wikipedia.org/wiki/Smith-Putnam_wind_turbine). Ein dort verwendetes Rotorblatt lässt sich ebenfalls dem Internet entnehmen, nämlich der Internetseite http://www.situstudio.com/blog/2010/09/01/smith-putnam/.

Das Rotorblatt der Smith-Putnam Wind Turbine ist, wie obigem Internet-Blog zu entnehmen ist, mit einem über die gesamte Rotorblattachse konstanten Rotorblattprofil gebaut worden. Das führt natürlich zu fertigungstechnischen Vereinfachungen im Vergleich zu heutigen, modernen Rotorblättern, die ein sich axial kontinuierlich veränderndes Profil aufweisen. Dabei verändert sich das Profil in axialer Richtung in seiner Größe und auch in seiner Art. Zusätzlich ist ein Rotorblatt einer heutigen modernen Windenergieanlage außerdem in axialer Richtung verdrillt, um den unterschiedlichen Anströmrichtungen Rechnung zu tragen, die bedingt durch die Drehung des Rotors in unterschiedlichem Abstand zur Rotornabe auftreten. Es kommt hinzu, dass besonders große Rotorblätter, insbesondere Rotorblätter mit sehr großer Tiefe im nabennahen Bereich zum Transport mehrteilig ausgeführt sein müssen.

Die Komplexität eines modernen Rotorblattes ist somit nicht zu vergleichen mit dem von der Smith-Putnam Wind Turbine bekannten Rotorblatt. Ein modernes Rotorblatt oder ein Abschnitt eines modernen Rotorblattes aus Stahl zu fertigen, bedarf somit einer Vielzahl individueller Überlegungen, Ansätze und Lösungen.

Aus dem Dokument EP 2 233 593 A2 ist ganz allgemein ein Verfahren und eine Warmumformanlage zur Herstellung von pressgehärteten Formbauteilen aus Stahlblech bekannt. Weiterhin ist ein allgemeines Verfahren und eine Vorrichtung zum Umformen eines Blechelementes aus Titan oder einer Titanlegierung aus dem Dokument US 5,113,681 bekannt.

Als allgemeiner Stand der Technik sei zudem auf die Dokumente DE 1 433 768 A, DE 1 180 709 A, DD 159 055 A1, DE 24 02 190A und WO 2010/100066 A2 verwiesen.

Der vorliegenden Erfindung liegt somit die Aufgabe zugrunde, zumindest eines der oben genannten Probleme zu adressieren. Insbesondere soll eine Rotorblattfertigung eines Rotorblattes oder eines Teils davon aus Stahl verbessert oder überhaupt erst ermöglicht werden. Zumindest soll eine alternative Lösung vorgeschlagen werden.

Erfindungsgemäß wird ein Verfahren nach Anspruch 1 vorgeschlagen. Demnach erfolgt ein Warmumformen eines Stahlblechs eines herzustellenden Rotorblattes einer Windenergieanlage so, dass zunächst das umzuformende Stahlblech in einem Ofen erwärmt wird. Hierbei liegt das Stahlblech - zunächst als ebene flache Platte - auf einem Herdwagen auf. Nach dem Erwärmen wird das erwärmte Stahlblech mit dem Herdwagen vom Ofen in eine Pressenvorrichtung zur Warmumformung verfahren. Der Herdwagen fährt somit unmittelbar mit dem Stahlblech vom Ofen in die Pressenvorrichtung, ohne dass zwischendurch ein Umladen erfolgt.

Ein Umladen erfolgt dann in der Pressenvorrichtung, wobei das erwärmte Stahlblech von dem Herdwagen auf einen eine Gegenform aufweisenden Formwagen umgeladen wird. Die Gegenform kann auch als Formbett bezeichnet werden Das erwärmte Stahlblech liegt nun auf der Gegenform und kann gepresst werden. Das Pressen erfolgt durch einen Pressstempel, der so auf das Stahlblech gepresst wird, dass sich das Stahlblech zwischen dem Pressstempel und der Gegenform umformt. Insbesondere nimmt das Stahlblech hierbei die Form des Pressstempels und der Gegenform an, die aufeinander abgestimmt sind.

Vorzugsweise erfolgt das Umladen des Stahlblechs so, dass das Stahlblech von dem Herdwagen in der Pressenvorrichtung angehoben wird. Der Herdwagen ist nun von dem Stahlblech getrennt und kann darunter herausgefahren werden. Entsprechend wird der Platz unter dem Stahlblech frei und die Gegenform wird mit dem Formwagen in die Pressenvorrichtung unter das angehobene Stahlblech gefahren. Das Stahlblech kann nun auf den Formwagen und damit auf die Gegenform abgesenkt werden. Hierdurch braucht eine etwaige Vorrichtung zum Durchführen des Abhebens nicht als externe Vorrichtung wie einen Gabelstapler vorgesehen zu sein. Vielmehr kann ein solches Abhebemittel ortsfest sein. Vorzugsweise bildet diese Anhebevorrichtung einen Teil der Pressenvorrichtung oder ist mit dieser fest verbunden. Das Umladen erfolgt somit durch Anheben des Stahlblechs und Wechseln der beiden Wagen.

Vorzugsweise fährt der Herdwagen auf einem Schienensystem vom Ofen zur Pressenvorrichtung. Günstig ist es zudem, dass der Formwagen auf einem oder dem Schienensystem in die Pressenvorrichtung fährt. Hierdurch ist eine Vereinfachung des Ablaufs, insbesondere des Beförderns des erwärmten Stahlblechs vom Ofen in die Pressenvorrichtung auf die Gegenform erreichbar. Vorzugsweise verwenden der Herdwagen und der Formwagen dasselbe Schienensystem, insbesondere dasselbe Schienenpaar. Hierdurch ist eine effiziente Vorrichtung erreichbar, die zudem den Wechsel des Stahlblechs vom Herdwagen zum Formwagen entsprechend effizient und zweckmäßig vorsieht.

Erfindungsgemäß wird eine Umformvorrichtung zum Warmumformen eines Stahlblechs gemäß Anspruch 3 vorgeschlagen. Diese Umformvorrichtung umfasst einen Ofen zum Erwärmen des Stahlblechs, eine Pressenvorrichtung um Umformen des Stahlblechs und einen Herdwagen zum Transportieren des Stahlblechs vom Ofen zur Pressenvorrichtung. Dabei ist diese Umformvorrichtung insbesondere dazu vorbereitet, ein oben beschriebenes Verfahren zum Warmumformen eines Stahlblechs durchzuführen.

Vorzugsweise weist der Ofen einen Ofenboden mit einer Bodenöffnung auf und der Herdwagen ist gekennzeichnet durch ein Fahrwerk zum Verfahren vom Ofen zur Pressenvorrichtung, einen Tragtisch zum Tragen des Stahlblechs beim Erwärmen im Ofen und beim Transport vom Ofen zur Pressenvorrichtung und eine Tragkonstruktion zum Verbinden des Tragtisches mit dem Fahrwerk. Die Tragkonstruktion ist dabei so ausgebildet, dass sie vom Fahrwerk durch die Bodenöffnung des Ofens zum Tragtisch im Ofen reicht, wenn der Tragtisch das Stahlblech im Ofen trägt. Mit anderen Worten kann der Herdwagen mit seinem Fahrwerk unter den Ofenboden fahren und dabei mittels der Tragkonstruktion den Tragtisch aber im Ofen halten.

Vorzugsweise ist die Umformvorrichtung dabei so ausgebildet, dass der Herdwagen bei geöffnetem Ofen mit der Tragkonstruktion in die Bodenöffnung hinein- bzw. daraus herausfahren kann. Insbesondere ist die Bodenöffnung als etwa schlitzförmige Öffnung in dem Ofenboden ausgebildet und die Tragkonstruktion ist entsprechend schlank ausgebildet, dass sie in diese schlitzförmige Öffnung hineingefahren werden kann, wenn das Fahrwerk unter den Ofen fährt. Nach dem Erwärmen des Stahlblechs kann dieses somit auf einfache Weise vom Ofen zur Pressenvörrichtung transportiert werden. Hierzu braucht nur der Ofen geöffnet zu werden und der Herdwagen kann zur Pressenvorrichtung herüberfahren.

Vorzugsweise weist die Umformvorrichtung einen verfahrbaren Formwagen zum Aufnehmen des Stahlblechs in der Pressenvorrichtung auf, der eine Gegenform bzw. Formbett beim Umformen bereitstellt.

Vorzugsweise ist ein Schienensystem zum Verfahren des Herdwagens vom Ofen zur Pressenvorrichtung vorgesehen sowie zum Verfahren des Formwagens in die Pressenvorrichtung und entsprechend auch aus der Pressenvorrichtung heraus. Insbesondere ist ein Schienenpaar vorgesehen, das von einer Seite der Pressenvorrichtung durch die Pressenvorrichtung hindurch und hinüber zum Ofen vorgesehen ist. Vorzugsweise wird der Abstand zwischen Ofen und Pressenvorrichtung gering gehalten. Der Abstand kann so groß gehalten werden, dass dort der leere Herdwagen, nachdem das erwärmte Stahlblech auf den Formwagen umgeladen wurde, mit einem neuen, kalten Stahlblech bestückt werden kann.

Vorzugsweise bildet die Hebevorrichtung, die das erwärmte Stahlblech zum Umladen anhebt, einen Teil der Pressenvorrichtung bzw. ist an der Pressenvorrichtung angeordnet und wird vorzugsweise von dieser betrieben. Die Hebevorrichtung ist dabei insbesondere so ausgebildet, dass sie ein gleichmäßiges Anheben des Stahlblechs vom Herdwagen gewährleistet und ebenso ein gleichmäßiges Absetzen des erwärmten Stahlblechs auf dem Formwagen gewährleistet.

Vorzugsweise weist die Hebevorrichtung mehrere, jeweils mit einer Bewegungsmechanik versehene Hebearme auf, die zum seitlichen Untergreifen unter das Stahlblech ausgebildet sind. Dabei wird vorgeschlagen, die Hebearme so zu betätigen, insbesondere eine entsprechende Steuerung vorzusehen, dass diese trotz eigener Bewegungsmechaniken, gleichmäßig das erwärmte Stahlblech anheben. Dadurch teilt sich das Gewicht gleichmäßig auf die Hebearme auf und es wird zudem der Gefahr entgegengewirkt, dass sich das erwärmte Stahlblech durchbiegen könnte.

Die Pressenvorrichtung ist insbesondere dazu vorgesehen, mit einer Form auf das erwärmte Stahlblech im Grunde von oben zu drücken oder zu pressen, während das erwärmte Stahlblech auf einer dazu korrespondierenden Gegenform bzw. Formbett ruht. Dennoch wird vorzugsweise vorgeschlagen, dass mehrere Einzelpressen hierfür vorgesehen sind, insbesondere werden acht Einzelpressen vorgeschlagen. Auf diese Einzelpressen kann die notwendige Kraft, die aufgebracht werden muss, verteilt werden. Durch eine entsprechende Steuerung wird dennoch die durch diese mehreren, also insbesondere acht Einzelpressen, aufgebrachte Kraft gleichmäßig bereitgestellt, so dass die zum Pressen verwendete Form gleichmäßig mit der gesamten Kraft der Einzelpressen heruntergedrückt werden kann. Die Einzelpressen bilden somit zusammen einen Formstempel zum Umformen des Stahlblechs. Vorzugsweise verfügen die Einzelpressen über eigene Antriebseinheiten, die beispielsweise hydraulisch oder anderweitig wie beispielsweise unter Zuhilfenahme eines Kniehebelmechanismus angesteuert werden können.

Bei dem beschriebenen Umformverfahren zum Warmumformen eines Stahlblechs können Stahlteile aus im Grunde üblichem Baustahl verwendet werden, die auf ihre jeweilige Umformtemperatur in dem Ofen erwärmt werden, um eine Normalisierung des Materials zu erreichen, wie z.B. Stahl oder Aluminium. Bei einer Stahlsorte beträgt die Umformtemperatur z.B. 900 bis 930°C. Die Einhaltung der Temperatur sollte möglichst genau erfolgen, um nicht das Gefüge des Stahls zu zerstören. Das Stahlteil, nämlich das Stahlblech, kann ein bis zu 3 x 12 m großes Stahlblech sein, das nach dem Erwärmen aus dem Ofen mit dem Herdwagen zur Umformstation, nämlich der Pressenvorrichtung, verfahren wird. In dieser Umformstation bzw. Pressenvorrichtung erfolgt das Umladen auf den Formwagen mit der Gegenform, die auch als Formbett bezeichnet werden kann. Somit wird hier das erwärmte Stahlblech mittels mehrerer Hebearme angehoben und der Herdwagen gegen das Formbett getauscht. Hierzu sind beide, nämlich der Herdwagen und der das Formbett aufnehmende Formwagen, vorzugsweise auf denselben Schienen gelagert.

Die Hebearme sind so gestaltet, dass das Stahlteil in möglichst senkrechter Richtung gehoben wird, wobei das Stahlteil, nämlich das Stahlblech, etwa waagerecht liegt.

Somit fährt der Herdwagen direkt in den Ofen und von dem Ofen zur Umformstation. Bisher war es aus dem Stand der Technik bekannt, ein Stahlteil aus dem Ofen mit einem Wagen, der im Grunde die vollständige Unterseite des Ofens bildete, herauszufahren und dann von dort mit einem Gabelstapler umzuladen. Gemäß einer bevorzugten Lösung wird hier jedoch vorgeschlagen, nur eine schmale Aussparung im Ofenboden zu verwenden, die schmaler ist als die Breite des zu erwärmenden Stahlblechs.

Eine bevorzugte Pressenvorrichtung bzw. Presse kann für 640 Tonnen Pressdruck ausgelegt sein und durch mehrere, insbesondere acht einzelne Pressen gebildet werden, die gleichmäßig arbeiten, um den nötigen Gesamtdruck aufzubringen. Der genannte Pressdruck ist ein mögliches Beispiel und kann bspw. auch höher oder niedriger liegen, je nach Materialsorte und Blechgröße.

Beispielhaft wird zudem ein Schweißverfahren vorgeschlagen. Ein solches Schweißverfahren wird zum Verbinden geformter, insbesondere wie oben beschrieben umgeformter Stahlbleche zu einem Rotorblatt oder einem Rotorblattsegment vorgeschlagen. Hierzu werden die zu verbindenden Stahlbleche zueinander in einer Vorbereitungsanordnung angeordnet und fixiert. Diese Vorbereitungsanordnung stellt somit dem Grunde nach bereits das herzustellende Rotorblattsegment dar, wobei die Fixierung nur so weit vorgesehen ist, dass das Schweißen zum endgültigen und festen Verbinden vorgenommen werden kann, ohne dass die umgeformten Stahlbleche dabei auseinanderfallen. Diese Vorbereitungsanordnung bildet somit im Wesentlichen ein festes Paket. In dieser Vorbereitungsanordnung werden die Stahlbleche dann untereinander durch Verschweißen an jeweiligen eine Schweißfuge bildende Berührungskanten miteinander verbunden. Das Schweißen erfolgt dabei als Unterpulverschweißen durch einen Schweißroboter.

Ein Unterpulverschweißen ist grundsätzlich bekannt als ein vollautomatisches Schweißverfahren für lange gerade und waagerechte Schweißnähte, wie beispielsweise einer Rohrlängsnaht. Erfindungsgemäß wird nun vorgeschlagen, das Unterpulverschweißverfahren mittels eines Schweißroboters für die komplexen Formen und damit komplexen Schweißnähte eines Rotorblattsegments zu verwenden. Hierbei ist zu beachten, dass ein solches Rotorblattsegment beispielsweise aus 24 umgeformten Stahlblechen gefertigt sein kann. Hierbei können beispielsweise zunächst zwei Teilsegmente aus jeweils 12 umgeformten Stahlblechen gefertigt werden. Dabei sind alle, zumindest die meisten hier verwendeten Stahlbleche, unterschiedlich und entsprechend ergeben sich auch eine Vielzahl unterschiedlicher Schweißnähte. Hierfür wird im Stand der Technik bisher kein Unterpulververfahren vorgeschlagen.

Ein Problem beim Unterpulverschweißen ist, dass das Pulver auch die jeweilige Schweißposition bedeckt, um hierdurch eine entsprechend abgeschirmte Schweißbedingung zu schaffen. Im Grunde wird das Pulver durch Schwerkraft an seinem Platz gehalten. Gemäß einer bevorzugten Ausführungsform wird nun vorgeschlagen, die Vorbereitungsanordnung beim Schweißen von einer Bewegungsvorrichtung zu bewegen, und zwar so, dass das Schweißen jeweils auf einem nach oben weisenden Bereich der Schweißfuge erfolgt. Die Schweißfuge ist hierbei beispielsweise eine Kerbe bzw. eine kerbenförmige Nut, die sich dadurch ergibt, dass zwei angefaste Kanten zweier zu verbindender Stahlbleche aneinandergesetzt werden. Diese Schweißfuge soll möglichst oben liegen, damit das Pulver beim Schweißen darauf liegen kann. Hierunter kann auch fallen, dass die Schweißfuge sich im Inneren der Vorbereitungsanordnung, also im Grunde im Inneren des zu fertigenden Rotorblattsegments befindet. Das zu fertigende Rotorblattsegment ist nämlich im Grunde ein Hohlkörper, der etwa eine Außenhaut aufweist, die im Wesentlichen der Oberfläche des Rotorblattsegmentes in diesem Bereich entspricht. Die zusammenzufügenden Stahlbleche bilden somit im Wesentlichen die Außenschicht des zu fertigenden Rotorblattsegmentes. Versteifungsstreben im Inneren dieses Rotorblattes bzw. Rotorblattsegmentes können hinzukommen und auch einer Verschweißung bedürfen.

Zum Schweißen wird nun der Schweißroboter, der beispielsweise einen Roboterarm mit sechs Gelenken aufweisen kann, der jeweils zu schweißenden Schweißfuge nachgeführt. Dabei wird die Vorbereitungsanordnung so bewegt, insbesondere um eine etwa horizontale Achse gedreht, dass der Schweißroboter zwar entlang der Schweißfuge nachgeführt wird, aber jeweils einen etwa waagerechten Abschnitt zum Schweißen vorfindet. Vorzugsweise wird somit eine Nachführung auf doppelte Art und Weise durchgeführt, nämlich eine Bewegung insbesondere Drehung der Vorbereitungsanordnung und damit der Stahlbleche so, dass die Schweißfuge etwa waagerecht ist, wobei der Schweißroboter die restliche Nachführung entlang der Schweißfuge durchführt.

Beispielsweise wird die Vorbereitungsanordnung somit während dem Schweißen gedreht, was insbesondere mit variierender Geschwindigkeit erfolgt. Das Rotorblattsegment weist im Querschnitt, bezogen auf eine Rotorblattlängsachse, ein eher langgezogenes Hohlprofil auf. Durch das Drehen mit variierender Geschwindigkeit kann diesem Umstand Rechnung getragen werden. Insbesondere wird das Rotorblatt langsam bzw. zeitweise gar nicht gedreht, wenn ein entsprechend langer Profilabschnitt unten bzw. oben ist, damit der Schweißroboter ausreichend Zeit hat, an einer entsprechenden waagrechten Schweißfuge entlang zu schweißen. Entsprechend wird die Drehbewegung schneller durchgeführt, wenn nur ein kurzer Abschnitt, wie beispielsweise eine Rotorblattvorderkante bei der Drehung gerade unten bzw. oben ist und geschweißt wird.

Insbesondere kann in Kenntnis des jeweils zu schweißenden Profilabschnitts die Drehgeschwindigkeit abhängig von einer entsprechenden Winkelposition dieser Drehung vorgenommen werden.

In einem weiteren Beispiel sind die Berührungskanten jeweils zweier umgeformter Stahlbleche hierbei mit einer Fase versehen, dass diese zusammen eine Kerbenform oder Keilform aufweisen. Diese Keil- oder Kerbenform begünstigt den Schweißvorgang, indem in dieser kerbenförmigen Nut wenigstens eine Schweißnaht mit dem Pulverschweißverfahren vorgenommen werden kann. Es ist zu beachten, dass es auf eine saubere Verschweißung ankommt und es wird darauf hingewiesen, dass üblicherweise eine Vielzahl von Schweißnähten in dieser einen Schweißfuge vorzunehmen sind.

Beispielhaft wird zudem eine Schweißvorrichtung zum Verbinden umgeformter Stahlbleche zu einem Rotorblatt oder Rotorblattsegmenten vorgeschlagen. Diese Schweißvorrichtung weist zumindest einen Schweißroboter zum Verbinden der in der Vorbereitungsanordnung benachbarten Stahlbleche durch ein Unterpulverschweißverfahren auf. Weiter ist eine Bewegungsvorrichtung vorgesehen, die die Vorbereitungsanordnung bewegt, so dass das Schweißen jeweils auf einem nach oben weisenden Bereich der Schweißfuge erfolgen kann. Diese Schweißvorrichtung ist insbesondere dazu vorbereitet, das oben beschriebene Schweißverfahren gemäß wenigstens einer der genannten Ausführungsformen durchzuführen.

Zum Beispiel ist ein Handsteuerungsmittel vorgesehen, mit dem ein Schweißer vor Ort auf Handbetrieb umstellen und den Roboter mit dem Handsteuermittel beim Schweißen weiterführen oder unterstützen kann. Grundsätzlich ist ein manuelles Unterpulverschweißen problematisch, weil der Schweißer aufgrund des Pulvers die Schweißnaht und damit das Schweißergebnis bzw. den Schweißvorgang nicht sehen kann. Gleichwohl kann ein solcher manueller Eingriff sinnvoll sein, insbesondere dann, wenn der Schweißroboter von der Naht abkommt oder abzukommen droht. Das kann z.B. dann der Fall sein, wenn sich der Schweißroboter ganz oder teilweise an einem vorprogrammierten Verlauf der Naht orientiert, die Naht aber von dem vorprogrammierten Verlauf der Naht abweicht. Hier kann nun manuell eine Nachjustierung vorgenommen werden, indem z.B. der Schweißroboter auf die Schweißnaht, oder ihre Mitte zurückgeführt wird.

In einem Ausführungsbeispiel wird hier ein herzustellendes Rotorblattsegment aus 24 Stahlformteilen, also bereits umgeformten Stahlblechen zusammengeschweißt. Die Stahlformteile, also Stahlbleche werden hierzu in Position gebracht und verschweißt. Zum Verschweißen ist beim Zuschneiden der Stahlbleche eine Fase vorgesehen worden, so dass die Fasen zweier zusammengesetzter Stahlformteile eine Kerbe oder ähnliche Fuge bilden. Diese Kerbe wird mit einem UP-Verfahren, nämlich dem genannten Unterpulververfahren mit mehren Lagen und mittels eines Schweißroboters verschweißt. Üblicherweise verschweißen Roboter nicht in einem UP-Verfahren, oder sie tun dies nur bei einer Lage, weil nach dem Schweißen jeder Lage das Pulver entfernt werden muss, was Handarbeit erfordert.

Insbesondere ist der Schweißroboter teilweise für Handbetrieb vorgesehen, indem er automatisch schweißen kann, dabei aber ein Schweißer die Arbeit des Schweißroboters beobachtet und gegebenenfalls eingreifen kann. Hierfür kann ein entsprechender Steuerknüppel, der umgangssprachlich auch als Joystick bekannt ist, vorgesehen sein. Ein guter Schweißer kann die Qualität der Schweißnaht hören und der Eingriff kann dadurch sinnvoll sein, meist wird sich der manuelle Eingriff aber darauf beschränken, dass der Schweißer korrigierend eingreift, wenn das tatsächlich zu schweißende Teil von dem zugrunde gelegten Teil abweicht, insbesondere geringfügig abweicht.

Das UP-Verfahren setzt voraus, dass die jeweils zu verschweißende Naht unten ist, damit das Pulver nicht wegrutscht. Hierfür wird gemäß einer Ausführungsform vorgeschlagen, dass das Rotorblatt so zu drehen ist, dass die gerade zu schweißende Stelle jeweils unten liegt. Wird eine umlaufende Naht geschweißt, ist das Rotorblattsegment kontinuierlich zu drehen. Dabei ist zu berücksichtigen, dass das Rotorblattsegment nicht kreisrund ist und die Drehgeschwindigkeit daran vorzugsweise angepasst wird. Vorzugsweise weist die Bewegungsvorrichtung, insbesondere Drehvorrichtung zum Drehen des Rotorblattsegmentes drei Drehachsen auf. Der Schweißroboter weist vorzugsweise sechs Gelenke auf, um entsprechende Freiheitsgrade zu haben.

Beispielhaft wird zudem ein Schneideverfahren zum Zuschneiden umgeformter Stahlbleche eines herzustellenden Rotorblattes einer Windenergieanlage mittels eines Plasmaroboters vorgeschlagen. Unter einem Plasmaroboter ist hier ein Laserroboter zu verstehen, der mittels Laserstrahl das Stahlblech schneidet.

Es wird vorgeschlagen, dass das Schneideverfahren zunächst so abläuft, dass das Bearbeitungsstück auf einen Formtisch aufgebracht wird, nämlich fest verspannt wird. Der Formtisch ist fest mit dem Plasmaroboter verbunden, so dass eine feste und bekannte Verknüpfung mit den Roboterachsen besteht. Anschließend wird ein Bearbeitungskopf des Plasmaroboters entlang einer dreidimensional verlaufenden, vorgesehenen Schneidlinie an dem Bearbeitungsteil entlang geführt, um das Bearbeitungsteil in diesem Bereich zu vermessen und etwaige Abweichungen zwischen dem Bearbeitungsteil und dem zugrundegelegten Originalteil zu erfassen und die Schneidlinie für das konkrete Bearbeitungsteil festzulegen, die nachfolgend auch als Führungsschneidlinie bezeichnet wird. Hierbei wird insbesondere der Abstand vom Bearbeitungskopf zum Bearbeitungsteil erfasst und der Bearbeitungskopf mit möglichst konstantem Abstand zum Bearbeitungsteil an dessen Oberfläche entlanggeführt. Zum Vermessen des Abstandes fließt bereits ein kleiner Plasmastrom, der dazu führt, dass an der vorgesehenen, an das Bearbeitungsstück angepassten Schneidlinie eine Markierungslinie entsteht, die auch als Markierungsnaht bezeichnet werden kann. Der Plasmaroboter nimmt bei der Vermessung die geänderte, nämlich an das Bearbeitungsstück angepasste Schneidlinie auf, die als Führungsschneidlinie hinterlegt wird und der Markierungsnaht entspricht. Der Einfachheit halber können Merkmale des Vermessungsprozesses auch im Zusammenhang mit dem Setzen der Markierungsnaht erläutert werden, obwohl es auf das Setzen der Markierungsnaht, jedenfalls auf das Ergebnis der gesetzten Markierungsnaht nicht unbedingt ankommt.

Beim Positionieren und/oder Verspannen des Bearbeitungsstücks auf dem Formtisch wird eine Basisebene festgelegt, die etwa eine mittlere Ebene für das konkrete Bearbeitungswerkstück darstellen sollte. Diese Basisebene kann für unterschiedliche Werkstücke unterschiedlich gewählt werden, Sie wird vorzugsweise für baugleiche Werkstücke übernommen und somit identisch gewählt werden. Beim Vermessen, und vorzugsweise auch beim Schneiden, kommt es auf zwei Bewegungsrichtungen an, die nachfolgend als Stanzrichtung und Stechrichtung oder vereinfacht als Stanzen und Stechen bezeichnet werden. Bewegungen, die senkrecht zu dieser Basis-Ebene ausgeführt werden, werden als Stanzen bezeichnet. Bewegungen, die in Arbeitsrichtung verlaufen, also in die Richtung, in die auch ein Schneidlaser des Plasmaroboters weist, wird als Stechen bezeichnet. Diese Richtungen, Stanzen und Stechen, können somit identisch sein, nämlich dort, wo der Laser senkrecht zur Basis-Ebene steht. Der Laser steht etwa dort senkrecht zur Basis-Ebene, wo die aktuelle Bearbeitungsposition des Bearbeitungsteils planparallel zur Basis-Ebene ist.

Während der Bearbeitungskopf entlang der vorgesehenen Schneidlinie geführt wird, sind Abweichungen des Bearbeitungsteils insbesondere gegenüber dem hinterlegten Originalteil in der Höhe zu erwarten, nämlich in der Stanz-Richtung, also senkrecht zur Basis-Ebene. Eine solche Abweichung macht sich für den Plasmaroboter, dennoch als Abweichung in Stech- und Stanzrichtung bemerkbar, solange nicht beide Richtungen übereinstimmen, Entsprechend kann das Nachführen des Bearbeitungskopfes des Plasmaroboters mit etwa konstantem Abstand somit auch in Stanz- und/oder Stechrichtung erfolgen. Vorzugsweise wird zum Nachführen des Bearbeitungskopfes aus diesen Abweichungen ein Korrekturwert bestimmt, der eine Komponente in Stanzrichtung und eine in Stechrichtung aufweist. Besonders bevorzugt wird aus beiden Abweichungskomponenten ein mittlerer Korrekturwert gebildet, der beide Abweichungskomponenten berücksichtigt. Wenn "a1" die Abweichung in Stanzrichtung ist, und "a2" die Abweichung in Stechrichtung ist, kann ein Korrekturwert "k1" in Stanzrichtung und ein Korrekturwert "k2" in Stechrichtung wie folgt berechnet werden:

$$k1 = 0{,}5 {*} a1; \quad k2 = 0{,}5 {*} a2$$

Die resultierende Korrektur ergibt sich durch vektorielle Addition der beiden Korrekturkomponenten. Bei obiger Berechnung fließen a1 und a2 jeweils zu 50% ein. Alternativ kann eine Gewichtung g1 und g2 für a1 bzw. a2 vorgenommen werden, Dann ergeben sich die folgenden Zusammenhänge:

$$k1 = g1 {*} a1; \quad k2 = g2 {*} a2$$

Für g1=g2=0,5 sind beide Berechnungsvorschriften identisch. Idealer Weise ist die Summe aus g1 und g2 gleich 1. Zur Berücksichtigung geringer Nichtlinearitäten kann es sinnvoll sein, dass diese Summe um wenige Prozent von 1 abweicht, insbesondere um 1 bis 5% größer als 1 ist, wenn der Bearbeitungskopf das Bearbeitungsteil von der konkaven Seite aus vermisst oder um 1 bis 5% kleiner, wenn der Bearbeitungskopf das Bearbeitungsteil von einer konvexen Seite aus vermisst. Vorzugsweise wird von der konkaven Seite vermessen.

Unter praktischen Gesichtspunkten muss also davon ausgegangen werden, dass das erhaltene umgeformte, zu schneidende Stahlblech, nämlich das Bearbeitungsteil, nicht exakt die idealerweise angenommene Form, nämlich die des Originalteils, das zugrundegelegt wird, aufweist und zudem auch von einem zum nächsten - der Theorie nach identischen - umgeformten Stahlblech variiert. Somit ist die Markierungsnaht, die die vermessene Naht wiedergibt, in der Realität nicht identisch mit der Schneidlinie, weil das umgeformte Stahlblechteil üblicherweise nicht die idealisierte Form aufweist.

Es wird dann vorgeschlagen, das Stahlblech mittels eines Bearbeitungskopfes des Plasmaroboters zu schneiden, indem der Bearbeitungskopf gemäß der beim Vermessen festgelegten Führungsschneidlinie gesteuert wird. Die Markierungsnaht gibt diese festgelegte Führungsschneidlinie wieder. Das Führen entlang der Markierungsnaht erfolgt dabei vorzugsweise basierend auf den bei der Vermessung des konkreten Bearbeitungsstücks aufgenommenen Werten so, dass die, ggf. sichtbare, Markierungslinie jedenfalls vom Roboter nicht benötigt wird. Hierbei ist nochmals zu betonen, dass zum Herstellen des Rotorblattsegmentes eine Vielzahl unterschiedlicher Stahlbleche zusammengesetzt werden müssen, die zuvor, nachdem sie umgeformt wurden, zurechtgeschnitten werden müssen. Diese umgeformten Stahlblechteile erfordern eine Schneidlinie und damit am Ende eine Schneidkante, die praktisch in keiner der drei kartesischen Richtungen konstant ist. Unter einer dreidimensional verlaufenden Schneidlinie bzw. dreidimensional verlaufenden Markierungsnaht ist somit eine solche Linie bzw. Naht zu verstehen, die in keiner Ebene liegt. Somit liegt hier eine wesentlich komplexere Form der Linie bzw. Naht vor, als dies beispielsweise beim Schneiden eines Rohres der Fall wäre. Wird ein solches Rohr geschnitten, insbesondere quer zur Längsrichtung, ergibt sich eine kreisförmige Schneidkante. Natürlich ist dieses exemplarische Rohr dreidimensional und auch die kreisförmige Schneidkante erstreckt sich im Grunde im Raum, aber es gibt eine Ebene, in der diese exemplarisch genannte kreisförmige Schneidkante liegt, nämlich üblicherweise eine, zu der die Rohrlängsachse die Normale bildet. Und insoweit lässt sich eine solche kreisförmige Schneidkante als eine zweidimensionale Schneidkante vollständig betrachten, legt man nur die Ebene entsprechend.

Dies ist bei den komplexen umgeformten Stahlblechen, wie sie der vorliegenden Erfindung zugrunde liegen, zumindest für einige Schneidkanten nicht der Fall. Das vorliegende Schneidverfahren basiert somit auf einer dreidimensionalen Steuerung, nämlich Nachführung des Bearbeitungskopfes in drei kartesische Richtungen.

Beispielsweise führt das vorgeschlagene Schneideverfahren auch das Schneiden einer Fase als Vorbereitung einer kerbenförmigen oder keilförmigen Schweißfuge durch, wie sie oben im Zusammenhang mit dem Schweißverfahren beschrieben wurde. Hierdurch kann schon beim Schneiden die vorgesehene Unterpulververschweißung, die hier mittels mehrerer Lagen, nämlich mehrerer Schweißnähte je Fuge vorgeschlagen wird, vorbereitet werden.

Zudem wird ein Plasmaroboter zum Zuschneiden umgeformter Stahlbleche eines herzustellenden Rotorblattes einer Windenergieanlage vorgeschlagen. Dieser Plasmaroboter umfasst einen Bearbeitungskopf mit einem Laserstrahlgeber zum Abgeben eines Lasers zum Schneiden des Stahlblechs. Weiterhin ist eine Bewegungsmechanik, insbesondere ein mehrgelenkiger Roboterarm zum Bewegen und Nachführen des Bearbeitungskopfes vorgesehen. Weiterhin ist ein Sensor vorgesehen zum Erfassen einer Markierungsnaht und/oder zum Erfassen der Oberfläche des Stahlblechs. Insbesondere ist der Plasmaroboter dazu vorbereitet, ein oben beschriebenes Schneidverfahren zumindest gemäß einer der genannten Ausführungsformen durchzuführen.

Zumindest wird somit gemäß einer Ausführungsform zum Zuschneiden der geformten bzw. umgeformten Stahlbleche ein Plasmaroboter, also ein Laserroboter vorgeschlagen. Ein solches Verfahren sieht vor, zunächst eine Vermessung der umgeformten Stahlbleche entlang einer gewünschten Schneidlinie, nämlich der so genannten Originalschneidlinie, vorzunehmen und dabei eine konkrete Schneidlinie, nämlich eine so genannten Führungsschneidlinie festzulegen, wobei eine Markierungsnaht gesetzt werden kann, die der der Führungsschneidlinie entspricht. Es werden hierbei also Abweichungen der Idealform der Stahlbleche berücksichtigt. Der Roboter passt sich beim Vermessen, Festlegen der Führungsschneidlinie und Setzen der Markierungsnaht der konkreten Kontur an, die er dabei im Grunde abfährt. Über den Plasmastrahl erhält er hierbei Informationen über den Abstand zum Stahlblech, also zur Wand des Stahlteils und kann seine jeweils aktuelle Position so nachführen. Die genaue Verfahrtrajektorie, die der Führungsschneidlinie entspricht, wird dabei aufgenommen und in der Steuerung gespeichert. An dieser Trajektorie orientiert sich der Roboter dann beim anschließenden Schneiden. Als Besonderheit soll nochmal darauf hingewiesen werden, dass das zu schneidende Objekt, nämlich das verformte bzw. umgeformte Stahlblech ein dreidimensionales Objekt ist, in dem Sinne, dass sich die Oberfläche in drei kartesische Richtungen ändert. Daraus folgt das genannte Problem, dass bei Abweichungen der Oberfläche von der Idealform zu entscheiden ist, in welche Richtung der Laser nachgeführt werden soll. Soll also ein Stechen erfolgen, nämlich in Richtung des Laserstrahls oder ein Stanzen, nämlich quer zur Basis-Ebene. Hier wird vorgeschlagen, eine Kombination bzw. einen Kompromiss aus beiden Richtungen vorzusehen.

Im Übrigen wird beim Zuschneiden das abgekühlte Stahlteil, also der nach der Warmumformung abgekühlt ist, mittels einer Hydraulikvorrichtung auf einer entsprechenden Unterlage gehalten wird. Das Blech wird auf diese Unterlage heruntergedrückt und hierdurch soll eine Verformung beim Schneiden vermieden werden.

Zudem wird ein Rotorblatt einer Windenergieanlage vorgeschlagen, das einen Stahlabschnitt umfasst, der mehrere Stahlbleche aufweist, wobei die Stahlbleche mit einem erfindungsgemäßen Umformverfahren umgeformt wurden, mit einem Schweißverfahren verbunden wurden und/oder gemäß einem Schneideverfahren zugeschnitten wurden.

Zudem wird eine Windenergieanlage mit einem oder mehreren solcher Rotorblätter vorgeschlagen.

Nachfolgend wird die Erfindung exemplarisch anhand von Ausführungsbeispielen unter Bezugnahme auf die begleitenden Figuren näher erläutert.

Fig. 1 zeigt eine Windenergieanlage in einer perspektivischen Ansicht.

Fig. 2 zeigt eine Umformstation in einer perspektivischen Ansicht.

Fig. 3 zeigt die Umformstation der Fig. 2 in einer seitlichen Ansicht.

Fig. 4 zeigt eine Pressenvorrichtung bzw. einen Pressenstand in einer Frontansicht.

Fig. 5 zeigt einen Ofen in einer Frontansicht zusammen mit einem Herdwagen.

Fig. 6 zeigt schematisch eine Schweißvorrichtung zum Unterpulverschweißen eines Rotorblattsegmentes.

Fig. 7 zeigt einen Ablaufplan zum Schneiden eines Stahlblechs mittels eines Plasmaroboters.

Fig. 8 veranschaulicht eine Nachführaufgabe eines Bearbeitungskopfes eines Plasmaroboters.

Fig. 9 zeigt schematischen einen Ausschnitt der Fig. 8.

Nachfolgend können für ähnliche, aber nicht identische Elemente identische Bezugszeichen verwendet werden, um die Gemeinsamkeit der Funktionalität etwaiger solcher Elemente zu unterstreichen.

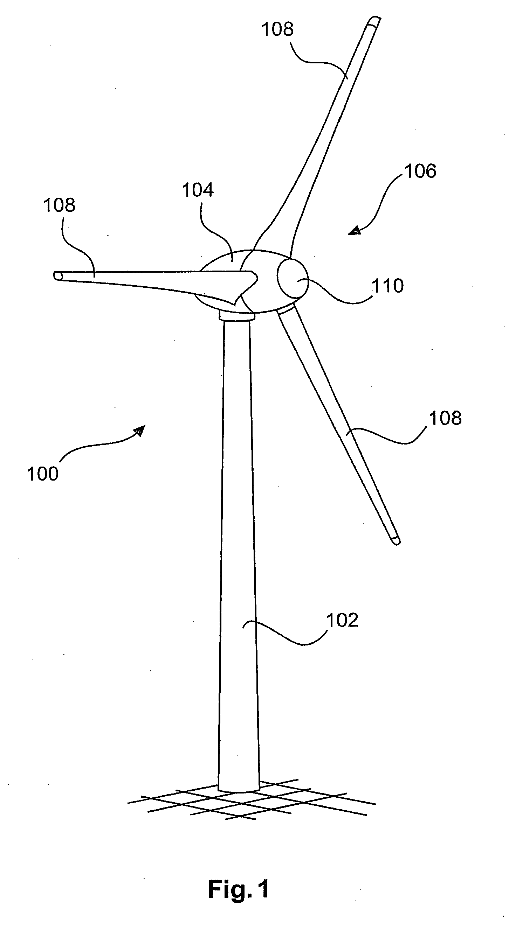

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

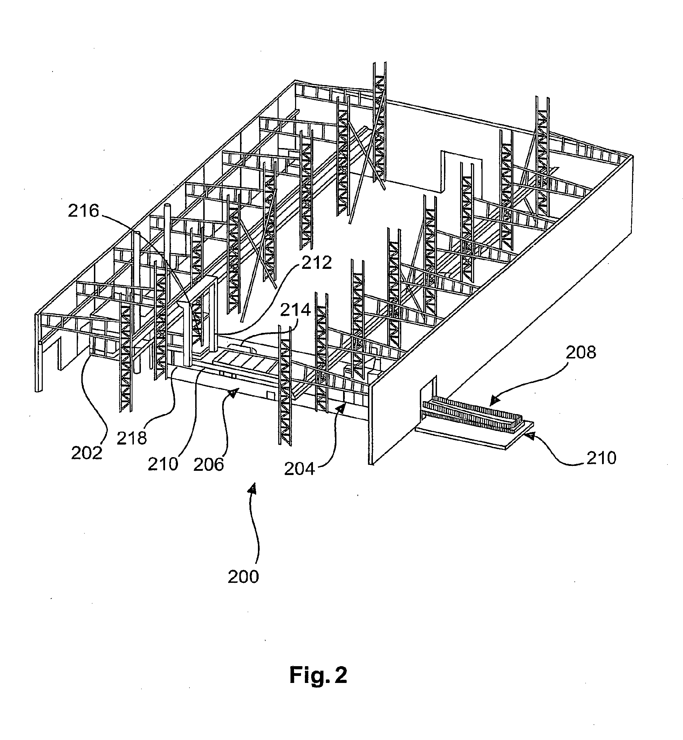

Fig. 2 zeigt eine Umformstation 200 in einer Gesamtdarstellung einer perspektivischen Ansicht. Wesentliche Elemente dieser Umformstation 200 sind der Ofen 202, der hier als Glühofen ausgestaltet ist, die Pressenvorrichtung 204, die auch als Pressenstand bezeichnet werden kann, ein Herdwagen 206, der Stahlbleche vom Ofen 202 zum Pressenstand 204 transportiert, ein Formwagen 208, auf den in der Pressenvorrichtung 204 das Stahlblech vom Herdwagen 206 umgeladen wird, und ein den Ofen 202 und den Pressenstand 204 verbindendes Schienensystem 210. Die perspektivische Ansicht der Fig. 2 zeigt eine Öffnung 212 des Ofens 202, durch die der Herdwagen 206 ein zu erwärmendes Stahlblech in den Ofen 202 hineinfahren bzw. daraus wieder herausfahren kann. Der Herdwagen 206 fährt hierzu auf dem Schienensystem 210, das im Grunde nur ein Schienenpaar umfasst, mit einem Tragtisch 214 in den Ofen 202 hinein. Auf dem Tragtisch wird hierbei das Stahlblech getragen und somit in den Ofen 202 hinein befördert. Die veranschaulichende Zeichnung der Fig. 2 zeigt ein solches Stahlblech nicht. Das Schienensystem 210 ist dabei unterhalb des Ofens 202 bzw. unterhalb eines Ofenbodens 216 verlegt. Eine längliche Bodenöffnung 218, ist im Bereich des Ofens 202 im Ofenboden 216 oberhalb des Schienensystems 210 ausgebildet.

Die Seitenansicht der Umformstation 200 verdeutlicht dessen Aufbau und zeigt unter anderem das durchgängige Schienensystem 210, das bis in den Aufbau des Ofens 202 reicht, allerdings nicht im Ofen 202 als solchem, sondern unterhalb dieses Ofens 202 verlegt ist. Im Bereich des Ofens 202 sind zwei Personen 220 veranschaulichend zum Demonstrieren der Größe der Anordnung eingezeichnet.

Auf dem Schienensystem 210 ist der Herdwagen 206 gelagert und geführt, der ein Fahrwerk 222 und einen Tragtisch 224 aufweist. Der Tragtisch 224 ist mit einer Vielzahl von Stützpunkten versehen, auf denen das zu erwärmende bzw. erwärmte Stahlblech 226 liegt. Der Tragtisch weist insoweit keine Tischplatte auf, sondern nur diese Vielzahl von Auflagepunkten. Der Tragtisch 224 ist mit dem Fahrwerk 222 über eine entsprechend verbindende Tragkonstruktion 228 verbunden.

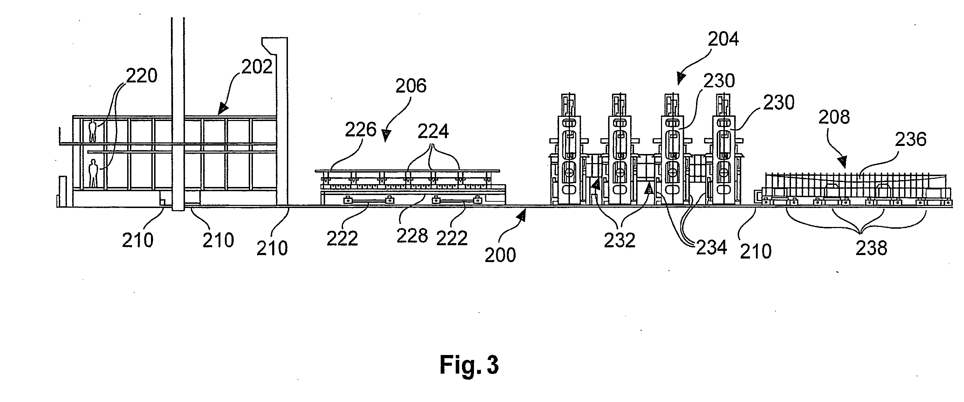

Das Schienensystem 210 reicht bis zur Pressenvorrichtung bzw. dem Pressenstand 204, der acht Einzelpressen 230 aufweist, die in zwei Reihen entlang des Schienensystems 210 angeordnet sind und von denen vier Einzelpressen 230 in der Fig. 3 zu erkennen sind. Diese acht Einzelpressen 230 bewegen einen Formstempel 232 gemeinsam.

Neben den Einzelpressen 230 sind auch noch Hebearme 234 dargestellt, von denen in der gezeigten Ausführungsform 16 Stück vorgesehen sind, von denen in der Fig. 3 acht zu erkennen sind. Mittels dieser Hebearme 234 wird das Stahlblech 226 von dem Herdwagen 206 angehoben, wenn der Herdwagen 206 im Pressenstand bzw. in der Pressenvorrichtung angekommen ist. Ist das Stahlblech 226 durch diese Hebearme 234 angehoben, fährt der Herdwagen 206 wieder zu der in Fig. 3 dargestellten Position und damit aus dem Pressenstand heraus. Der gezeigte Formwagen 208 fährt dann in den Pressenstand 204 unter das mittels der Hebearme 234 angehobene Stahlblech 226. Das Stahlblech 226 kann dann mittels der Hebearme 234 auf den Formwagen 208 abgesenkt werden. Dadurch kommt das Stahlblech 226 auf einer Gegenform 236, die auch als Formbett 236 bezeichnet werden kann, lose zu liegen. Das erwärmte Stahlblech 226 kann dann mittels der Form bzw. dem Formstempel 232, betätigt durch die acht Einzelpressen 230, auf das Stahlblech gedrückt werden, so dass das Stahlblech 226 die Form des Formstempels 232 und des daran angepassten Formbetts 236 annehmen kann.

Der Formwagen 208 ist somit in der Fig. 3 in einer außerhalb des Pressenstandes 204 angeordneten Warteposition dargestellt. Der Formwagen weist ein Formwagenfahrwerk 238 auf, das über eine sehr hohe Stabilität verfügt und in der Lage ist, große Kräfte aufzunehmen, da es nicht nur das Stahlblech 226 tragen muss, sondern auch das Gewicht des Formbettes 236.

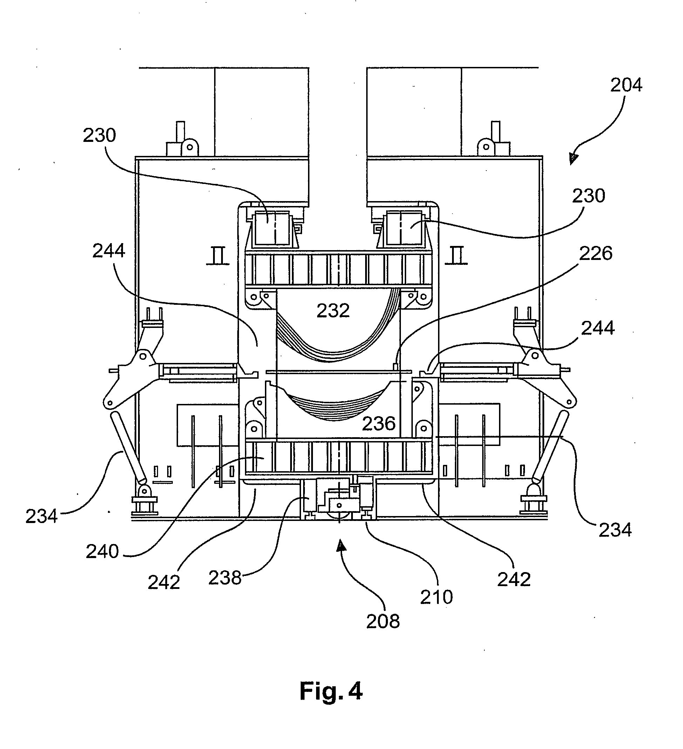

Fig. 4 zeigt eine Frontansicht auf den Pressenstand 204 und liefert dabei eine Frontansicht auf den Formstempel 232 auf dem Formwagen 208, und es zeigt die Hebearme 234.

Der Formstempel 232 wird durch acht Einzelpressen 230 gleichzeitig und gleichmäßig auf das Formbett 236 zum Umformen des Stahlblechs 226 bewegt. Der Formwagen 208 fährt mit seinem Formwagenfahrwerk 238 auf dem Schienensystem 210 und trägt das Formbett 236 über einen Formträger 240. Zum Pressen des Stahlblechs 226 kann der Formträger 240 auf einer Trägerauflage 242, die beidseitig des Formwagenfahrwerks 238 angeordnet ist, abgelegt werden. Hierdurch kann erreicht werden, dass beim Pressen des Stahlblechs 226 nicht die hierbei entstehenden enormen Druckkräfte von dem Formwagenfahrwerk 238 aufgenommen werden müssen.

Zum Anheben und Absenken des Stahlblechs 226 sind die Hebearme 234 vorgesehen, die Blechauflagen 244 aufweisen, mit denen die Hebearme 234 unter das Stahlblech 226 reichen können. Durch die gewählte Mechanik des Hebearms 234 wird eine möglichst gleichmäßige senkrechte Anhebung des Stahlblechs 226 erreicht.

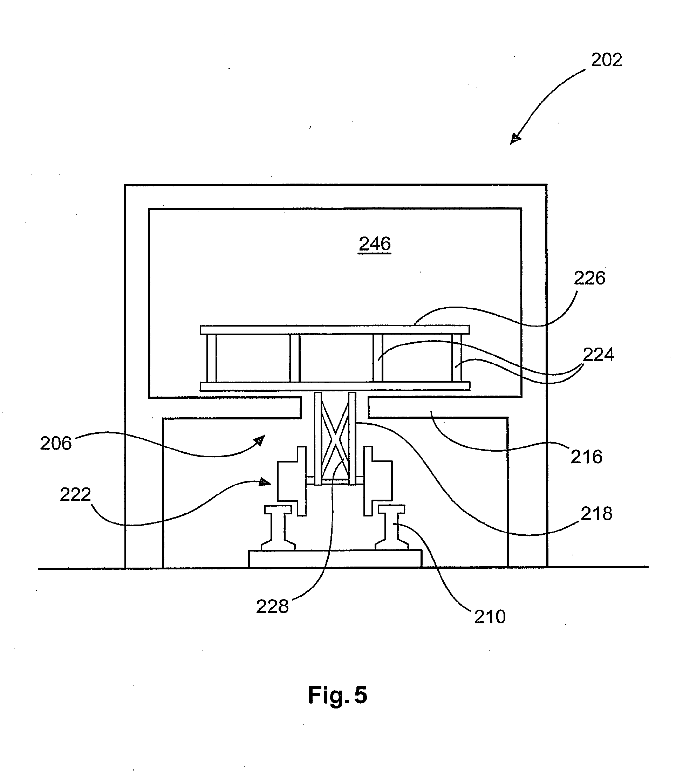

Fig. 5 zeigt eine schematische Darstellung einer Frontansicht des Ofens 202 und des Herdwagens 206. Der Ofen 202 weist einen Ofeninnenraum 246 und wenigstens einen Ofenboden 216 auf. Der Herdwagen 206 lagert mit seinem Fahrwerk 222 auf dem Schienensystem 210. Vom Fahrwerk 220 reicht eine Tragkonstruktion 228 durch die längliche Bodenöffnung 218 in den Ofenraum 246. In dem Ofenraum 246 ist der Tragtisch 224 angeordnet und wird von der Tragkonstruktion 228 getragen. Auf dem Tragtisch 224 ist ein Stahlblech 226 dargestellt, das im Ofen 202 und damit im Ofenraum 246 erwärmt wird.

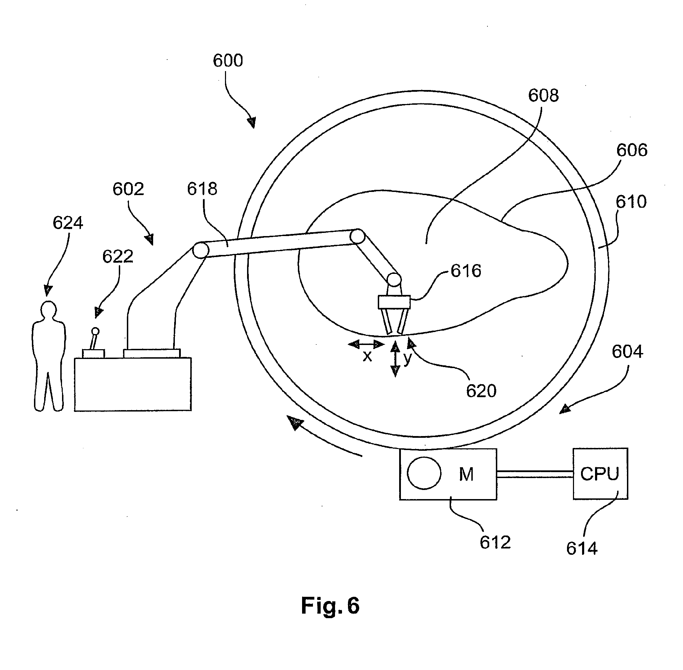

Die Schweißvorrichtung 600 der Fig. 6, die schematisch dargestellt ist, umfasst einen Schweißroboter 602 und eine Bewegungsvorrichtung 604. In der Bewegungsvorrichtung 604 ist ein Rotorblattsegment 606 in der Bewegungsvorrichtung 604 befestigt. Die Befestigung ist in der Darstellung der Fig. 6 nicht gezeigt. Somit kann das Rotorblattsegment 606 mittels der Bewegungsvorrichtung 604 um eine Längsachse 608 gedreht werden. Die Längsachse 608 verläuft in die Zeichenebene hinein und ist hier nur als Punkt veranschaulicht. Die Bewegungsvorrichtung 604 weist hierfür einen Drehkranz 610 auf, der um diese Längsachse 608 dreht. Hierfür ist ein Antriebsmotor 612 vorgesehen, der durch einen Prozessrechner 614 angesteuert wird.

Der Schweißvorgang wird von einem Schweißkopf 616 ausgeführt, der einen Bearbeitungskopf bildet und an einem mehrgelenkigen Roboterarm 618 des Schweißroboters 602 angeordnet ist und von diesem geführt wird. Das Schweißen erfolgt jeweils an der aktuellen Schweißstelle 620 an dem Rotorblattsegment 606. Die Fig. 6 zeigt die aktuelle Schweißstelle 620 als eine Schweißstelle, die im Innenraum des Rotorblattsegmentes 606 angeordnet ist. Ebenso kann auch eine außen liegende Schweißnaht geschweißt werden, die entsprechend oben auf dem Rotorblatt 606 jeweils liegt.

Die Bewegungsvorrichtung 604 sorgt durch die Drehung des Drehkranzes 610 und damit die Drehung des Rotorblattsegmentes 606 um die Längsachse 608 dafür, dass die aktuelle Schweißstelle 620 immer auf einem waagerechten Abschnitt des Rotorblattsegments 606 angeordnet ist. Für den Fall der gezeigten Innenschweißung bedeutet das, dass die Drehvorrichtung 604 dafür sorgt, dass die aktuelle Schweißstelle 620 im Wesentlichen immer unten liegt. Im Falle einer äußeren Schweißung bedeutet das im Grunde, dass die aktuelle Schweißstelle 620 im Wesentlichen immer oben liegt.

Die genaue Position der aktuellen Schweißstelle 620 verändert sich dabei in zwei zur Längsachse 608 senkrechten Richtungen, die in Fig. 6 als x- und y-Richtung eingezeichnet sind. Je nach Verlauf der zu schweißenden Naht kann auch eine Bewegung in Richtung der Längsachse 608 hinzukommen. Der Vollständigkeit halber wird darauf hingewiesen, dass das gezeigte Rotorblattsegment 606, das vor dem Verschweißen auch als Vorbereitungsanordnung 606 bezeichnet werden kann, im Wesentlichen einen Hohlkörper darstellt, der als Basis für ein Rotorblatt oder Teil eines Rotorblattes dient. Eine konkrete aerodynamische Form muss somit in diesem Stadium des Verschweißens des Hohlkörpers noch nicht vorgesehen sein. Insbesondere können später Elemente, wie beispielsweise ein spitz zulaufendes Hinterkantenprofil ergänzt werden.

Um die Veränderung der Position der aktuellen Schweißstelle 620 zu berücksichtigen, führt der Schweißroboter 602 den Schweißkopf 616 unter Zuhilfenahme des veranschaulichend dargestellten Roboterarms 618 der jeweils aktuellen Schweißstelle 620 nach. Es wird darauf hingewiesen, dass auch die Anordnung des Schweißroboters 602 in der Fig. 6 nur veranschaulichend ist. Insbesondere wird der Roboterarm 618 nicht durch den Drehkranz 610 hindurch reichen und auch nicht durch eine Haut des Rotorblattsegments 606 hindurch reichen. Vielmehr wird der Roboterarm 618 in Längsrichtung etwa entlang der Drehachse 610 durch den Drehkranz 610 und in das Rotorblattsegment 606 hineingeführt. Ein solcher Roboterarm kann eine Länge von über 20 m aufweisen, insbesondere eine Länge von bis zu 35 m.

An dem Schweißroboter 602 ist zudem ein Handsteuerungsmittel 622 vorgesehen, mit dessen Hilfe eine Person 624 ergänzend manuell in die Schweißsteuerung eingreifen kann.

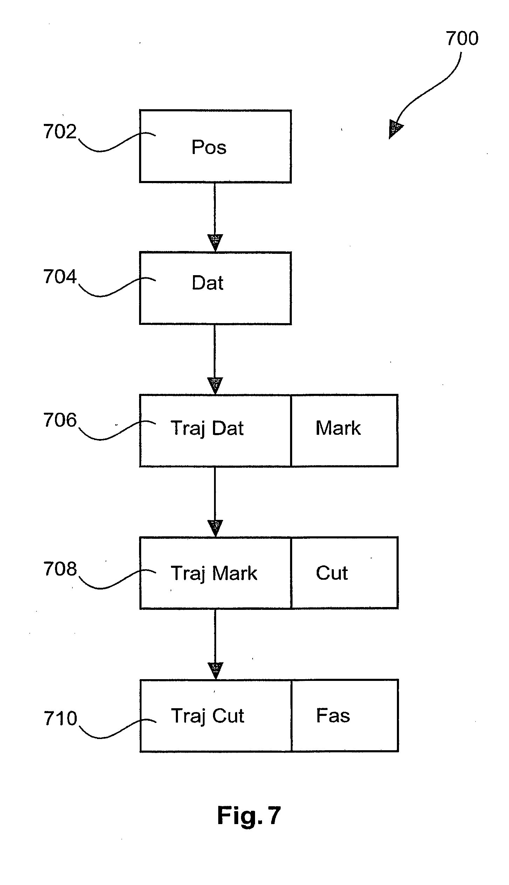

Fig. 7 zeigt einen vereinfachten Ablaufplan für das Schneiden eines umgeformten Stahlblechs mittels eines Plasmaroboters, also mittels eines Roboters, der durch einen Laser das umgeformte Stahlblech schneidet. Der Schneidablauf 700 beginnt im Positionierungsblock 702 damit, dass das umgeformte Stahlblech in vorbestimmter Position befestigt und damit positioniert wird.

Anschließend erfolgt gemäß dem Datenblock 704 eine Auswahl der Daten, in denen insbesondere für das aktuell zu schneidende Stahlblech die Daten für die entsprechende Schneidlinie, insbesondere für eine vorgesehene Originalschneidlinie hinterlegt sind. Der Datenblock 704 ist logisch dem Positionierungsblock 702 nachgeordnet, weil erst durch die Festlegung des zu schneidenden Stahlblechs klar ist, welcher Datensatz zu verwenden ist. Beispielsweise können zum Herstellen eines Rotorblattsegments aus Stahl 24 unterschiedliche, umgeformte Stahlbleche verwendet werden. Grundsätzlich kann aber die zeitliche Abfolge des Positionsblocks 702 und des Datenblocks 704 in umgekehrter Richtung erfolgen. Es kommt auch eine gleichzeitige Ausführung in Betracht.

In dem Markierungsblock 706 wird dann abhängig von den ausgewählten Daten auf dem umgeformten Stahlblech eine gewünschte Schneidlinie, nämlich die vorgesehene Originalschneidlinie als Trajektorie abgefahren und dabei das Stahlblech vermessen und eine an das so vermessene Stahlblech angepasste Führungsschneidlinie bestimmt und Hinterlegt, sowie eine Markierungsnaht gesetzt. Die Markierungsnaht ist hierbei das sichtbare Ergebnis, was dem Markierungsblock 706 seinen Namen verleiht. Wichtig ist die Bestimmung und Hinterlegung der Führungsschneidlinie. Sie wird bestimmt, während der Bearbeitungskopf, nämlich der Schweißkopf, basierend auf der Originalschneidlinie dem tatsächlichen Verlauf des Stahlblechs nachgeführt wird.

Anschließend wird in dem Schneidblock 708, der auch als Cut-Block 708 bezeichnet werden kann, das Stahlblech erneut mit dem Plasmaroboter bzw. seinem Bearbeitungskopf abgefahren, und zwar basierend auf der zuvor aufgenommenen Führungsschneidlinie und damit entlang der im Markierungsblock 706 gesetzten Markierungsnaht. Das Nachführen des Bearbeitungskopfes erfolgt hierbei sehr präzise und hierbei wird das Schneiden des Stahlblechs entlang der Markierungsnaht vorgenommen.

Das Stahlblech ist nun zugeschnitten und es kann sich für eine, mehrere oder alle Kanten des nun zugeschnittenen Stahlblechs der Fasenblock 710 anschließen, bei dem der Plasmaroboter mit seinem Bearbeitungskopf die betreffenden Kanten abfährt und anfast, um hierdurch eine Schweißnut als Kerbenform vorzubereiten, wenn zwei eine solche Fase aufweisende Kanten, also entsprechend zwei Stahlbleche zusammengesetzt werden.

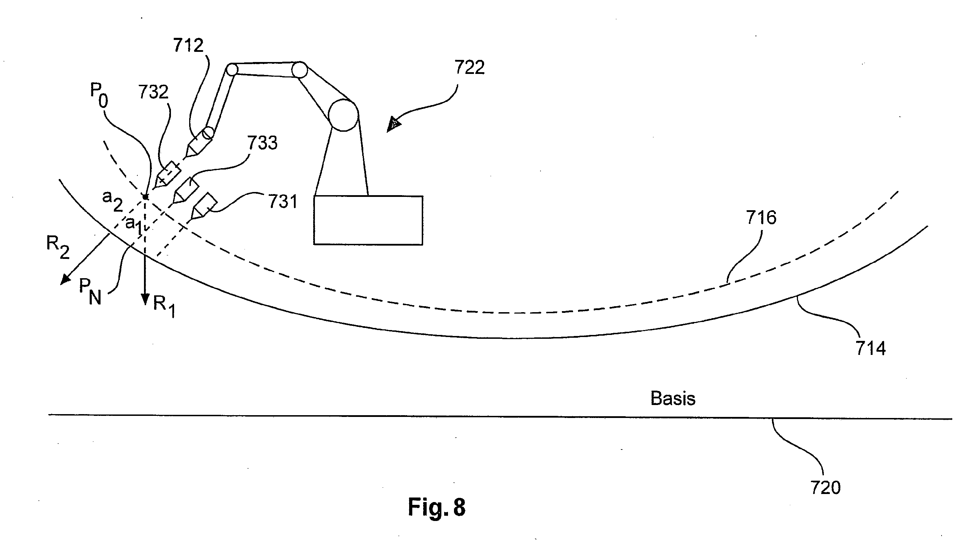

Der Schneidvorgang ist danach im Grunde beendet und das Stahlblech kann aus seiner Befestigung entnommen und weiterverarbeitet werden. Fig. 8 zeigt einen Plasmaroboter 722 mit einem Bearbeitungskopf 712. In der Fig. 8 ist zudem schematisch dargestellt ein tatsächliches Zuschneiden des Stahlbleches 714, für dessen Darstellung eine durchgezogene Linie gewählt wurde, und mit einer gestrichelten Linie ein angenommenes Stahlblech 716, das für ein Originalstahlblech und damit ein Originalbearbeitungsteil steht, das die Grundlage für die Festlegung einer Originalschneidkennlinie, die auch als optimale Schneidkennlinie angesehen werden kann, bildet. Weiterhin ist in Fig. 8 schematisch eine Basisebene 720 dargestellt. Im Grunde sind in dieser schematischen Darstellung die Basisebene 720 und die beiden Stahlbleche 714 und 716 in einer Seitenansicht dargestellt, die aber rein schematisch ist. Insbesondere können die beiden Stahlbleche 714, 716 auch in die Zeichenebene hineingebogen sein, was der Einfachheit halber hier nicht dargestellt ist.

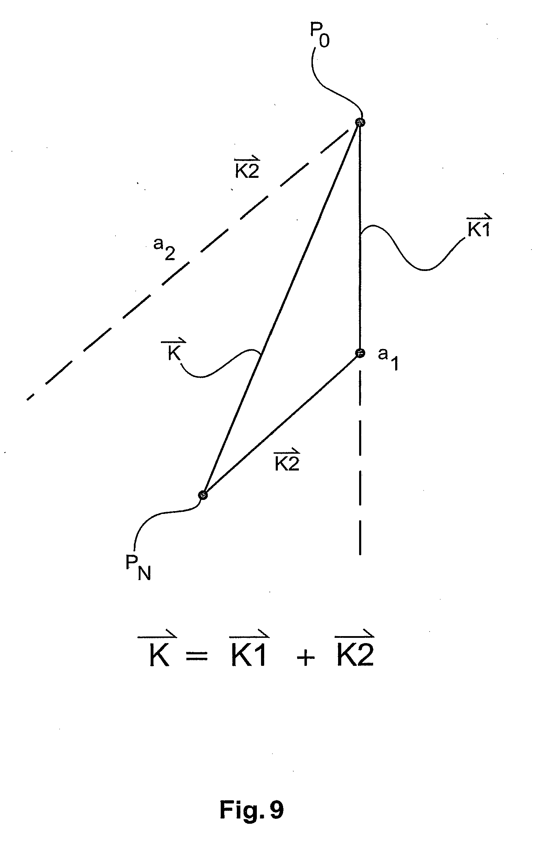

Fig. 8 zeigt hierbei eine Momentanaufnahme des Bearbeitungskopfes 712 beim Vermessen des tatsächlich vorhandenen zu überarbeitenden Stahlblechs 714. Der in dieser Momentanaufnahme dargestellte Bearbeitungskopf 712 zeigt seine idealisierte Position zu dem Punkt P0 auf dem angenommenen, Originalstahlblech 716. Von dem Punkt P0 ergibt sich in Stanzrichtung $R_1$ ein Abstand a1 zum tatsächlichen Stahlblech 714. Außerdem ergibt sich von dem Punkt P0 in Stechrichtung $R_2$ ein Abstand a2 zum tatsächlichen Stahlblech 714. Es gibt nun eine Vielzahl von Möglichkeiten, den Bearbeitungskopf 712 aufgrund der festgestellten Abweichung zum tatsächlichen Stahlblech 714 nachzuführen. Wird der Bearbeitungskopf 714 um den Abstand a1 in Stanzrichtung $R_1$ zur Korrektur verändert, ergibt sich die gezeigte Bearbeitungskopfposition 731. Wird der Bearbeitungskopf 712 stattdessen nur um den Abstand a2 in Stechrichtung $R_2$ zur Korrektur verändert, resultiert die zweite Position 732 des Bearbeitungskopfes. Gemäß einer Ausführungsform wird aber eine Korrektur vorgeschlagen, die eine Kombination der beiden Korrekturen vorschlägt, die zu der ersten Position 731 bzw. der zweiten Position 732 führt. Diese vorgeschlagene dritte Position ist mit dem Bezugszeichen 733 für den Bearbeitungskopf gekennzeichnet. Diese Position berücksichtigt sowohl die Abweichung a1 in Stanzrichtung $R_1$ als auch die Abweichung a2 in Stechrichtung $R_2$. Die genaue Berechnung ist hierzu in der Fig. 9 erläutert.

Fig. 9 zeigt vergrößert zunächst nur die beiden Abstände a1 der Stanzrichtung und a2 der Stechrichtung. Es wird hier vorgeschlagen, den halben Abstand a1 der Stanzrichtung als Korrekturvektor $\overline{k1}$ zu verwenden. Der halbe Abstand a2 in Stechrichtung wird als Korrekturvektor $\overline{k2}$ verwendet. Eine vektorielle Addition führt zu dem gesamten Korrekturvektor $\overline{k}$. Mit diesem lässt sich aus dem optimalen Punkt P0 der neue Punkt $P_N$ bestimmen. Der neue Punkt $P_N$ ist auch in der Fig. 8 eingezeichnet und korrespondiert mit der dritten Position 733 des Bearbeitungskopfes. Durch diese Berechnung der Korrektur für den Bearbeitungskopf 712 unter Berücksichtigung sowohl der Abweichung a1 in Stanzrichtung $R_1$ als auch der Abweichung a2 in Stechrichtung $R_2$ führt zu einem vorteilhaften Ergebnis, nämlich einer vorteilhaften Berechnung des neuen Punktes $P_N$ und damit der korrigierten Position 733 des Bearbeitungskopfes.

**Patentansprüche**

1.    Umformverfahren zum Warmumformen eines Stahlblechs (226) eines herzustellenden Rotorblatts (108) einer Windenergieanlage (100) umfassend die Schritte:

    - Erwärmen des Stahlblechs (226) in einem Ofen (202) während das Stahlblech (226) auf einem Herdwagen (206) liegt,
    - Verfahren des erwärmten Stahlblechs (226) mit dem Herdwagen (206) vom Ofen (202) in eine Pressenvorrichtung (204) zur Warmumformung,
    - Verfahren eines Formwagens (208) in die Pressenvorrichtung (204),
    - Umladen des erwärmten Stahlblechs (226) in der Pressenvorrichtung (204) von dem Herdwagen (206) auf den eine Gegenform (236) aufweisenden Formwagen (208) und
    - Pressen des Stahlblechs (226) durch wenigstens einen Pressstempel (232), der so auf das Stahlblech (226) presst, dass sich dieses zwischen dem Pressstempel (232) und der Gegenform (236) umformt, insbesondere die Form des Pressstempels (232) und der Gegenform (236) annimmt,

    wobei das Umladen so erfolgt, dass

    - das Stahlblech (226) von dem Herdwagen (206) angehoben wird,
    - der Herdwagen (206) unter dem Stahlblech (226) herausgefahren wird,
    - die Gegenform (236) mit dem Formwagen (208) unter das Stahlblech (226) gefahren wird und
    - das Stahlblech (226) auf die Gegenform (236) abgesenkt wird.

2.    Umformverfahren nach Anspruch 1, **dadurch gekennzeichnet, dass** der Herdwagen (206) auf einem Schienensystem (210) vom Ofen (202) zur Pressenvorrichtung (204) fährt und/oder dass der bzw. ein Formwagen (208) auf einem oder dem Schienensystem (210) in die Pressenvorrichtung (204) fährt.

3.    Umformvorrichtung (200) zum Warmumformen eines Stahlblechs (226), umfassend:

    - einen Ofen (202) zum Erwärmen des Stahlblechs (226),
    - eine Pressenvorrichtung (204) zum Umformen des Stahlblechs (226),
    - einen Herdwagen (206) zum Transportieren des Stahlblechs (226) vom Ofen zur Pressenvorrichtung,

    wobei die Umformvorrichtung **gekennzeichnet ist durch** einen eine Gegenform (236) beim Umformen bereitstellenden, in die Pressenvorrichtung (204) und heraus verfahrbaren Formwagen (208) zum Aufnehmen des Stahlblechs (226) in der Pressenvorrichtung (204) und zum Bereitstellen einer Gegenform (236) beim Umformen.

4.    Umformvorrichtung (200) nach Anspruch 3, **dadurch gekennzeichnet, dass**

    - der Ofen (202) einen Ofenboden (216) mit einer Bodenöffnung (218) aufweist und
    - der Herdwagen (206) **gekennzeichnet ist durch**

        - ein Fahrwerk (222) zum Verfahren vom Ofen (202) zur Pressenvorrichtung (204),
        - einen Tragtisch (224) zum Tragen des Stahlblechs beim Erwärmen im Ofen und beim Transport vom Ofen (202) zur Pressenvorrichtung (204) und
        - eine Tragkonstruktion (228) zum Verbinden des Tragtisches (224) mit dem Fahrwerk (222),

    wobei die Tragkonstruktion (228) so ausgebildet ist, dass sie vom Fahrwerk (222) **durch** die Bodenöffnung (218) zum Tragtisch (224) im Ofen (202) reicht, wenn der Tragtisch (224) das Stahlblech (226) im Ofen (202) trägt.

5.    Umformvorrichtung (200) nach Anspruch 4, so ausgebildet, dass der Herdwagen (206) bei geöffnetem Ofen (202) mit der Tragkonstruktion (228) in die Bodenöffnung (218) hinein- bzw. daraus herausfahren kann, insbesondere dass die Bodenöffnung (218) als schlitzförmige Öffnung in dem Ofenboden (216) ausgebildet ist.

6. Umformvorrichtung (200) nach einem der Ansprüche 3-5, **gekennzeichnet durch** ein Schienensystem (210) zum Verfahren des Herdwagens (206) vom Ofen (202) zur Pressenvorrichtung (204) und zum Verfahren eines bzw. des Formwagens (208) in die Pressenvorrichtung (204) und aus der Pressenvorrichtung (204) heraus, wobei das Schienensystem (210) insbesondere ein Schienenpaar aufweist, auf dem der Herdwagen (206) und der Formwagen (208) verfahrbar angeordnet sind.

7. Umformvorrichtung (200) nach einem der Ansprüche 3-6, **dadurch gekennzeichnet, dass** die Pressenvorrichtung (204) eine Hebevorrichtung (234) aufweist zum gleichmäßigen Anheben des Stahlblechs (226) vom Herdwagen (206) und zum gleichmäßigen Absetzen des Stahlblechs auf einem bzw. dem Formwagen (208).

8. Umformvorrichtung (200) nach Anspruch 7, **dadurch gekennzeichnet, dass** die Hebevorrichtung (234) mehrere, jeweils mit einer Bewegungsmechanik versehene Hebearme (234) aufweist zum seitlichen Untergreifen unter das Stahlblech (226).

9. Umformvorrichtung (200) nach einem der Ansprüche 3-8, **dadurch gekennzeichnet, dass** die Pressenvorrichtung (204) mehrere, insbesondere 8 Einzelpressen (230) aufweist, um zusammen einen Formstempel (232) zum Umformen auf das auf dem Formwagen (208) angeordnete Stahlblech (226) zu pressen, wobei die Einzelpressen (230) über eigene Antriebseinheiten verfügen.

**Claims**

1. Forming method for hot forming a steel sheet (226) of a rotor blade (108) which is to be produced for a wind turbine (100) comprising the steps of:

   - heating the steel sheet (226) in a furnace (202) whilst the steel sheet (226) rests on a bogie hearth (206),
   - moving the heated steel sheet (226) with the bogie hearth (206) from the furnace (202) into a pressing device (204) for hot forming,
   - moving a forming carriage (208) into the pressing device (204),
   - loading the heated steel sheet (226) in the pressing device (204) from the bogie hearth (206) onto the forming carriage (208) which has a counter-mould (236) and
   - pressing the steel sheet (226) by means of at least one pressing punch (232), which presses on the steel sheet (226) in such a manner that it is shaped between the pressing punch (232) and the counter-mould (236), in particular taking on the shape of the pressing punch (232) and the counter-mould (236),

the loading being carried out in such a manner that

   - the steel sheet (226) is lifted from the bogie hearth (206),
   - the bogie hearth (206) is moved out below the steel sheet (226),
   - the counter-mould (236) is moved with the forming carriage (208) below the steel sheet (226) and
   - the steel sheet (226) is lowered onto the counter-mould (236).

2. Forming method according to claim 1, **characterised in that** the bogie hearth (206) moves on a rail system (210) from the furnace (202) to the pressing device (204) and/or **in that** the or a forming carriage (208) moves on a or the rail system (210) into the pressing device (204).

3. Forming device (200) for hot forming a steel sheet (226) comprising:

   - a furnace (202) for heating the steel sheet (226),
   - a pressing device (204) for forming the steel sheet (226),
   - a bogie hearth (206) for transporting the steel sheet (226) from the furnace to the pressing device,

the forming device being **characterised by** a forming carriage (208) which provides a counter-mould (236) during the forming operation and which can be moved in and out of the pressing device (204) for receiving the steel sheet (226) in the pressing device (204) and for providing a counter-mould (236) during the forming operation.

4. Forming device (200) according to claim 3, **characterised in that**

   - the furnace (202) has a furnace base (216) having a base opening (218) and
   - the bogie hearth (206) is **characterised by**
   - a travel mechanism (222) for moving from the furnace (202) to the pressing device (204),
   - a carrier table (224) for carrying the steel sheet during heating in the furnace and during transport from the furnace (202) to the pressing device (204) and
   - a carrier construction (228) for connecting the carrier table (224) to the travel mechanism (222),

the carrier construction (228) being constructed in such a manner that it extends from the travel mechanism (222) through the base opening (218) to the carrier table (224) in the furnace (202) when the carrier table (224) carries the steel sheet (226) in the oven (202).

5.  Forming device (200) according to claim 4, constructed in such a manner that, when the furnace (202) is open, the bogie hearth (206) can move with the carrier construction (228) into or out of the base opening (218), in particular in that the base opening (218) is constructed as a slot-like opening in the furnace base (216).

6.  Forming device (200) according to any one of claims 3 to 5, **characterised by** a rail system (210) for moving the bogie hearth (206) from the furnace (202) to the pressing device (204) and for moving a or the forming carriage (208) into the pressing device (204) and out of the pressing device (204), the rail system (210) in particular having a rail pair on which the bogie hearth (206) and the forming carriage (208) are movably arranged.

7.  Forming device (200) according to any one of claims 3 to 6, **characterised in that** the pressing device (204) has a lifting device (234) for uniform lifting of the steel sheet (226) from the bogie hearth (206) and for uniform positioning of the steel sheet on a or the forming carriage (208).

8.  Forming device (200) according to claim 7, **characterised in that** the lifting device (234) has a plurality of lifting arms (234) which are provided with a movement mechanism for laterally engaging below the steel sheet (226).

9.  Forming device (200) according to any one of claims 3 to 8, **characterised in that** the pressing device (204) has a plurality of, in particular 8, individual presses (230) in order together to press a forming punch (232) for forming onto the steel sheet (226) which is arranged on the forming carriage (208), the individual presses (230) having separate drive units.

**Revendications**

1.  Procédé de déformation pour le formage à chaud d'une tôle d'acier (226) entrant dans la fabrication d'une pale de rotor (108) d'une éolienne (100), comprenant les étapes de :

    - chauffage de la tôle d'acier (226) dans un four (202) pendant que la tôle d'acier (226) se trouve sur une sole mobile (206) ;
    - transfert de la tôle d'acier (226) chauffée avec la sole mobile (206) du four (202) dans un dispositif d'emboutissage (204) pour le formage à chaud ;
    - transfert d'un chariot porte-moule (208) dans le dispositif d'emboutissage (204) ;
    - transbordement dans le dispositif d'emboutissage (204) de la tôle d'acier (226) chauffée de la sole mobile (206) sur le chariot porte-moule (208) doté d'un contre-moule (236) ; et
    - emboutissage de la tôle d'acier (226) par au moins un poinçon d'emboutissage (232) qui comprime la tôle d'acier (226) de telle manière que celle-ci se déforme entre le poinçon d'emboutissage (232) et le contre-moule (236), en particulier adopte la forme du poinçon d'emboutissage (232) et du contre-moule (236),

le transbordement s'effectuant de sorte que

    - la tôle d'acier (226) est soulevée de la sole mobile (206),
    - la sole mobile (206) sous la tôle d'acier (226) est sortie,
    - le contre-moule (236) est amené sous la tôle d'acier (226) avec le chariot porte-moule (208) et
    - la tôle d'acier (226) est abaissée sur le contre-moule (236).

2.  Procédé de déformation selon la revendication 1, **caractérisé en ce que** la sole mobile (206) circule sur un système de rails (210) du four (202) au dispositif d'emboutissage (204) et/ou **en ce que** le ou un chariot porte-moule (208) circule sur un ou le système de rails (210) dans le dispositif d'emboutissage (204).

3.  Dispositif de déformation (200) pour le formage à chaud d'une tôle d'acier (226), comprenant :

    - un four (202) destiné à chauffer la tôle d'acier (226),
    - un dispositif d'emboutissage (204) destiné à déformer la tôle d'acier (226),
    - une sole mobile (206) destinée à transporter la tôle d'acier (226) du four au dispositif d'emboutissage,

le dispositif de déformation étant **caractérisé par** un chariot porte-moule (208) fournissant un contre-moule (236) lors de la déformation, pouvant être déplacé dans le dispositif d'emboutissage (204) et à l'extérieur de celui-ci, et destiné à recevoir la tôle d'acier (226) dans le dispositif d'emboutissage (204) et à fournir un contre-moule (236) lors de la déformation.

**4.** Dispositif de déformation (200) selon la revendication 3, **caractérisé en ce que**

- le four (202) comprend un fond de four (216) pourvu d'une ouverture de fond (218) et
- la sole mobile (206) est **caractérisée par**
- un châssis (222) destiné à transférer du four (202) au dispositif d'emboutissage (204),
- une table de support (224) destinée à porter la tôle d'acier lors du chauffage dans le four et lors du transport du four (202) au dispositif d'emboutissage (204) et
- une structure portante (228) destinée à relier la table de support (224) au châssis (222),

la structure portante (228) étant conçue de sorte qu'elle parvient du châssis (222) à la table de support (224) dans le four (202) en passant par l'ouverture de fond (218), lorsque la table de support (224) porte la tôle d'acier (226) dans le four (202).

**5.** Dispositif de déformation (200) selon la revendication 4, conçu de sorte que la sole mobile (206), lorsque le four (202) est ouvert, peut entrer avec la structure portante (228) dans l'ouverture de fond (218) ou en sortir, en particulier de sorte que l'ouverture de fond (218) est réalisée sous la forme d'une ouverture en forme de fente dans le fond de four (216).

**6.** Dispositif de déformation (200) selon l'une quelconque des revendications 3 à 5, **caractérisé par** un système de rails (210) destiné à transférer la sole mobile (206) du four (202) au dispositif d'emboutissage (204) et à transférer une ou la sole mobile (208) dans le dispositif d'emboutissage (204) et à l'extérieur du dispositif d'emboutissage (204), le système de rails (210) comprenant en particulier une paire de rails sur laquelle la sole mobile (206) et le chariot porte-moule (208) sont disposés mobiles.

**7.** Dispositif de déformation (200) selon l'une quelconque des revendications 3 à 6, **caractérisé en ce que** le dispositif d'emboutissage (204) comprend un dispositif de levage (234) destiné à soulever de manière uniforme la tôle d'acier (226) de la sole mobile (206) et à abaisser de manière uniforme la tôle d'acier sur un ou le chariot porte-moule (208).

**8.** Dispositif de déformation (200) selon la revendication 7, **caractérisé en ce que** le dispositif de levage (234) comprend plusieurs bras de levage (234) pourvus respectivement d'un mécanisme de déplacement et destinés à venir se plaquer latéralement sous la tôle d'acier (226).

**9.** Dispositif de déformation (200) selon l'une quelconque des revendications 3 à 8, **caractérisé en ce que** le dispositif d'emboutissage (204) comprend plusieurs, en particulier huit, presses individuelles (230) destinées à comprimer ensemble un poinçon de déformation (232) destiné à déformer sur la tôle d'acier (226) disposée sur le chariot porte-moule (208), les presses individuelles (230) disposant d'unités d'entraînement propres.

**Fig. 1**

**Fig. 2**

**Fig. 3**

**Fig. 4**

**Fig. 5**

**Fig. 6**

700

702 ⟍ Pos

704 ⟍ Dat

| 706 ⟍ Traj Dat | Mark |
|---|---|

| 708 ⟍ Traj Mark | Cut |
|---|---|

| 710 ⟍ Traj Cut | Fas |
|---|---|

**Fig. 7**

**Fig. 8**

$$\overrightarrow{K} = \overrightarrow{K1} + \overrightarrow{K2}$$

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2233593 A2
- US 5113681 A
- DE 1433768 A
- DE 1180709 A
- DD 159055 A1
- DE 2402190 A
- WO 2010100066 A2